# EUROPÄISCHE PATENTSCHRIFT

(11) **EP 2 445 758 B1**
(45) Veröffentlichungstag und Bekanntmachung des Hinweises auf die Patenterteilung: **03.07.2013**
(21) Anmeldenummer: 10723494.0
(22) Anmeldetag: 04.05.2010
(51) Int. Cl.: B60R 16/04

(54) **VORRICHTUNG ZUR SPANNUNGSVERSORGUNG EINES KRAFTFAHRZEUGS MIT EINEM KÜHLERBLOCK**
DEVICE FOR SUPPLYING VOLTAGE TO A VEHICLE HAVING A COOLER BLOCK
DISPOSITIF D'ALIMENTATION EN TENSION AVEC UN FAISCEAU DE RADIATEUR POUR UN VÉHICULE

(30) Priorität: 23.06.2009 DE 102009030016
(43) Veröffentlichungstag der Anmeldung: 02.05.2012
(73) Patentinhaber: Bayerische Motoren Werke Aktiengesellschaft, 80809 München (DE)
(72) Erfinder: ECKSTEIN, Frank, 92256 Hahnbach (DE); LATH, Björn, 80805 München (DE); GOESMANN, Hubertus, 89564 Nattheim-Auernheim (DE); DIRMEIER, Micha, 80809 München (DE); PETZ, Philipp, 81379 München (DE)
(86) Internationale Anmeldenummer: PCT/EP2010/002709
(87) Internationale Veröffentlichungsnummer: WO 2010/149242

(56) Entgegenhaltungen:
- EP-A1- 1 990 849
- WO-A2-03/103083
- DE-C1- 19 517 733

## Beschreibung

Die Erfindung betrifft eine Vorrichtung zur Spannungsversorgung eines Kraftfahrzeugs, insbesondere eines PKW, LKW oder Motorrads. Eine solche Vorrichtung umfasst ein oder mehrere Speicherzellenmodule, welche jeweils ein oder mehrere elektrochemische Speicherzellen und/oder Doppelschichtkondensatoren umfassen, die neben- und/oder übereinander angeordnet sind. Die Vorrichtung umfasst weiter einen Kühlerblock, der eine Aufnahme für das oder die Speicherzellenmodule und eine Struktur zur Wärmeabfuhr der von dem oder den Speicherzellenmodulen abgegebenen Wärme umfasst. Die Erfindung betrifft ferner einen Kühlerblock für eine derartige Vorrichtung.

Die Speicherzellen und/oder Doppelschichtkondensatoren eines Speicherzellenmoduls sind typischerweise elektrisch in Reihe und/oder parallel miteinander verschaltet, um beispielsweise für einen Elektromotor eine ausreichende Energie bereitstellen zu können. Eine Vorrichtung zur Spannungsversorgung kann eine Mehrzahl solcher Speicherzellenmodule aufweisen. Im Falle eines Unfalls muss sichergestellt sein, dass die Speicherzellen und/oder Doppelschichtkondensatoren des Speicherzellenmoduls nicht beschädigt werden, da eventuell auslaufender Elektrolyt zu einer Schädigung von Umwelt und/oder Menschen führen könnte. Weiterhin könnte eine Quetschung der Speicherzellen zu einem Kurzschluss in der Zelle führen. Dies kann einen thermischen Vorfall in der Speicherzelle bedingen, was zu einem Entgasen, zu einer Explosion oder zu einem Brand der Speicherzellen führen könnte.

Ferner können die elektrochemischen Speicherzellen und/oder Doppelschichtkondensatoren im Betrieb erhebliche Temperaturen erreichen, so dass deren Kühlung notwendig ist. Die Kühlung der elektrochemischen Speicherzellen und/oder Doppelschichtkondensatoren erfolgt von außen. Kann eine ausreichende Kühlung nicht mit hinreichender Sicherheit gewährleistet werden, so können rasch Defekte auftreten, die mit den Anforderungen an die Lebensdauer bei einer Verwendung in Automobilien wirtschaftlich nicht vereinbar sind.

Die EP 1 990 849 A1 zeigt eine Antriebsbatteriebaugruppe. In einem Außengehäuse sind Batteriezellen angeordnet, die über an dem Außengehäuse angeformte Positioniervorsprünge positioniert sind. Dabei liegen die Batteriezellen auf den Positioniervorsprüngen auf. Im Bereich des Bodens des Außengehäuses sind Rippen vorgesehen, wodurch im Crashfall die Stabilität des Außengehäuses erhöht wird. Die Rippen und die Positioniervorsprünge stehen in Wirkverbindung zueinander.

In der DE 195 17 733 C1 ist ein Batteriesystem mit mehreren separaten Batteriezellenblöcken beschrieben. Bei diesem Batteriesystem wird erreicht, dass die in einem Batterietrog angeordneten Batteriezellenblöcke kräftemäßig voneinander entkoppelt sind. Hierzu sind zwischen nebeneinanderliegenden Batteriezellenblöcken Tragstelzen vorgesehen. Die Tragstelzen weisen jeweils eine Tragkonsole auf, auf denen die Batteriezellenblöcke aufsitzen.

Es ist daher Aufgabe der vorliegenden Erfindung, eine Vorrichtung zur Spannungsversorgung eines Kraftfahrzeugs sowie einen Kühlerblock darzustellen, welche einen hohen Schutz gegen Beschädigung der Speicherzellen und deren mechanische Befestigungselemente aufweisen.

Diese Aufgabe wird gelöst durch eine Vorrichtung zur Spannungsversorgung mit den Merkmalen des Patentanspruches 1 sowie einen Kühlerblock mit den Merkmalen des Patentanspruches 21. Vorteilhafte Ausgestaltungen ergeben sich aus den abhängigen Patentansprüchen.

Die Erfindung schafft eine Vorrichtung zur Spannungsversorgung eines Kraftfahrzeugs, insbesondere eines PKW, LKW oder eines Motorrads, mit einem oder mehreren Speicherzellenmodulen, welche jeweils ein oder mehrere elektrochemische Speicherzellen und/oder Doppelschichtkondensatoren umfassen, die neben- und/oder übereinander angeordnet sind, und mit einem Kühlerblock, der eine Aufnahme für das oder die Speicherzellenmodule und eine Struktur zur Wärmeabfuhr der von dem oder den Speicherzellenmodulen abgeführten Wärme umfasst. Erfindungsgemäß umfasst der Kühlerblock eine Kraftaufnahmevorrichtung mit zumindest einem plattenförmigen Kraftaufnahmeelement, das zwischen zwei Speicherzellenmodulen (10) angeordnet ist und durch welches im Crashfall eine auf die Vorrichtung wirkende Kraft aufgenommen und um die Speicherzellenmodule herum abgeleitet wird.

Durch das Vorsehen der Kraftaufnahmevorrichtung mit zumindest einem Kraftaufnahmeelement, wie z.B. einer Crashplatte, wird ein Schutz der Speicherzellen und/oder Doppelschichtkondensatoren eines Speicherzellenmoduls bereitgestellt. Bei einer Verformung eines Karosseriebauteils und einem mechanischen Kontakt mit der erfindungsgemäßen Vorrichtung werden die Kräfte zunächst von der Kraftaufnahmevorrichtung aufgenommen und um die Speicherzellenmodule herum geleitet. Hierdurch kann eine Beschädigung der Speicherzellenmodule bis zum Auftreten einer Maximalkraft verhindert werden.

In einer Ausgestaltung der Vorrichtung ragt das zumindest eine Kraftaufnahmeelement der Kraftaufnahmevorrichtung jeweils zumindest abschnittsweise über den Kühlerblock hinaus. Hierdurch wird bei einer Verformung eines Karosseriebauteils im Bereich der Vorrichtung sichergestellt, dass die über den Kühlerblock hinausragenden Abschnitte des zumindest einen Kraftaufnahmeelements zuerst mit einer Kraft beaufschlagt werden, wodurch die erfindungsgemäße Kraftleitung um die Speicherzellenmodule herum erfolgt.

In einer weiteren Ausgestaltung wirkt das zumindest eine Kraftaufnahmeelement zur Kraftleitung mit einem oder mehreren, den Kühlerblock umgebenden Bauteil oder Bauteilen zusammen. Bei dieser Ausgestaltung braucht das Kraftaufnahmeelement nicht über den Kühlerblock hinauszuragen. Um die Schutzfunktion dennoch übernehmen zu können, sind entsprechende Bauteile vorgesehen, welche im Falle einer Deformation eines Karosseriebauteils im Bereich der Vorrichtung um das Maß in den Kühlerblock hineinragen, um welches das zumindest eine Kraftaufnahmeelement zurückgesetzt ist. Auch hierdurch wird der Kraftleitpfad aufrecht erhalten. Ein Vorteil dieser Vorgehensweise besteht darin, dass die Herstellung der Vorrichtung vereinfacht ist.

Es ist ohne Weiteres erkennbar, dass bei einer Mehrzahl an Kraftaufnahmeelementen manche zumindest abschnittsweise über den Kühlerblock hinausragen und bei einer Verformung direkt mit Kraft beaufschlagt werden, während andere der Kraftaufnahmeelemente mit einem oder mehreren den Kühlerblock umgebenden Bauteilen zusammenwirken, um den Kraftleitpfad aufrecht zu erhalten.

Um die erfindungsgemäße Vorrichtung zur Spannungsversorgung eines Kraftfahrzeugs stabil, aber dennoch kompakt bereitstellen zu können, ist es zweckmäßig, wenn das zumindest eine Kraftaufnahmeelement seitlich an einem der Speicherzellenmodule vorbeigeführt ist. Ein maximaler Schutz für die Speicherzellenmodule ist dann bereitgestellt, wenn zwischen zwei benachbart angeordneten Speicherzellenmodulen jeweils zumindest eines der Kraftaufnahmeelemente vorgesehen ist.

In einer weiteren Ausgestaltung sind zumindest zwei Kraftaufnahmeelemente, welche jeweils unterschiedlichen und benachbarten Aufnahmen zugeordnet sind, in einer Kraftleitrichtung hintereinander angeordnet. Das Vorsehen zweier hintereinander angeordneter Kraftaufnahmeelemente kann beispielsweise dann vorgesehen sein, wenn die Vorrichtung zwei, in Kraftwirkung hintereinander angeordnete und voneinander getrennte, Aufnahmen aufweist, in welche jeweils zumindest ein Speicherzellenmodul eingebracht wird. Eine solche Ausgestaltung ist beispielsweise aus Gründen der Handhabung während der Fertigung sowie zur optimalen Wärmeabfuhr vorteilhaft. Die Kraftaufnahmeelemente können, sofern montagetechnisch möglich, auch einstückig ausgebildet sein.

In einer weiteren Ausgestaltung weist das zumindest eine Kraftaufnahmeelement Zapfen auf, welche durch den Kühlerblock hindurchgeführt sind und über diesen hinausragen. Durch die über den Kühlerblock hinausragenden Zapfen der Kraftaufnahmeelemente ist sichergestellt, dass diese im Falle einer Deformation der Karosserie des Fahrzeugs als erste Elemente mit den sich deformierenden Karosseriebauteilen in Kontakt kommen.

Wenn zwei Kraftaufnahmeelemente, welche jeweils unterschiedlichen und benachbarten Aufnahmen zugeordnet sind, in einer Kraftleitrichtung hintereinander angeordnet sind, ist es weiterhin zweckmäßig, wenn die jeweiligen Zapfen der hintereinander angeordneten Kraftaufnahmeelemente zur Kraftleitung aneinander grenzend angeordnet sind. Hierdurch wird die Kraftübertragung von demjenigen Kraftaufnahmeelement, welches durch ein sich deformierendes Karosseriebauteil mit Kraft beaufschlagt wird, an das dahinter liegende Kraftaufnahmeelement weitergeleitet, ohne dass die jeweiligen Aufnahmen bzw. Speicherzellenmodule einer schädlichen Kraft ausgesetzt werden. Zweckmäßigerweise sind die jeweiligen Zapfen derart ausgebildet, dass eine geringe Verschiebung der Kraftaufnahmeelemente aufgrund des Crashs nicht zu einer Verformung der Struktur zur Wärmeabfuhr, insbesondere von Kühlmittel führenden Leitungen, führt.

Zweckmäßigerweise erstreckt sich das zumindest eine Kraftaufnahmeelement in Richtung einer Fahrzeuglängsachse oder einer Fahrzeugquerachse, wenn die Vorrichtung in dem Fahrzeug verbaut ist. Hierdurch werden der Einbausituation der Vorrichtung in dem Kraftfahrzeug sowie typischen Unfallszenarien Rechnung getragen. Die Einbausituation hängt unter anderem davon ab, an welcher Stelle im Fahrzeug die Vorrichtung verbaut ist und in welcher Richtung im Falle eines Unfalls eine Deformation der Fahrzeugkarosserie am wahrscheinlichsten ist.

Eine weitere Stabilisierung der Vorrichtung sowie eine Verbesserung der Wärmeabfuhr wird dadurch bewirkt, dass die Struktur zur Wärmeabfuhr zumindest auf einer Seite der Aufnahme vorgesehen ist und der Kühlerblock eine Spannvorrichtung umfasst, welche dazu ausgebildet ist, eine vorgegebene Kraft zu erzeugen, durch die die Struktur zur Wärmeabfuhr an ein jeweiliges Speicherzellenmodul pressbar ist. Dieser vorteilhaften Ausgestaltung liegt die Überlegung zu Grunde, dass ein Mindestdruck zwischen den Komponenten aufgebracht werden muss, um Lufteinschlüsse mit einem hohen thermischen Widerstand zu vermeiden und für einen guten thermischen Kontakt zu sorgen. Dieser Mindestdruck kann weiterhin Relativbewegungen der Komponenten zueinander verhindern. Der notwendige Mindestdruck wird bei einer Vorrichtung zur Spannungsversorgung durch die Spannvorrichtung bereitgestellt. Die Spannvorrichtung erzeugt zwischen der Struktur zur Wärmeabfuhr und einem jeweiligen Speicherzellenmodul die notwendige Kraft, um den thermischen Kontakt zwischen den Speicherzellenmodulen und der Struktur zur Wärmeabfuhr zu verbessern.

Die Spannvorrichtung der Vorrichtung umfasst in einer zweckmäßigen Ausgestaltung eine Anzahl an Verbindungsmitteln, welche dazu ausgebildet ist, die vorgegebene Kraft zu erzeugen und direkt oder indirekt auf die Struktur zur Wärmeabfuhr zu übertragen. Wie aus der nachfolgenden Beschreibung ersichtlich werden wird, kann es sich bei dem Verbindungsmittel um eine einfache Schraube oder ein ähnliches Befestigungsmittel handeln. Prinzipiell ist jede Art von Verbindungsmittel geeignet, welche die vorgegebene Kraft erzeugen kann.

Gemäß einer weiteren Ausgestaltung umfasst die Struktur zur Wärmeabfuhr zumindest auf den gegenüberliegenden Seiten der Aufnahme jeweils eine Kühlplatte mit Kühlkanälen für ein Kühlmittel oder ein Kältemittel, die an einer Stirnseite der Aufnahme über flexible Kühlkanäle strömungstechnisch verbunden sind. Die flexiblen, z.B. bogenförmigen, Kühlkanäle gleichen während der Montage einen Distanzunterschied zwischen den Kühlplatten nach der Kraftbeaufschlagung aus indem sie bei der Verspannung nachgeben und z.B. ausbiegen oder auslenken.

Gemäß einer weiteren Ausgestaltung ist auf den von dem oder den Speicherzellenmodulen abgewandten Seiten der Struktur zur Wärmeabfuhr jeweils eine Spannplatte vorgesehen, wobei die Anzahl an Verbindungsmitteln die Spannplatten kraft- und/oder formschlüssig miteinander verbindet. Durch das Vorsehen der Spannplatten, zusätzlich zu der Struktur zur Wärmeabfuhr, wird ein strukturell stabilerer Kühlerblock bereitgestellt. Insbesondere sind die Spannplatten aus einem Metall oder einem Kunststoff gebildet. Es ist hierbei besonders bevorzugt, wenn die Spannvorrichtung, insbesondere die Spannplatte, aus einem thermisch isolierenden Material gebildet ist oder ein thermisch isolierendes Material umfasst. Beispielsweise kann eine thermisch isolierende Schicht auf die aus Metall bestehende Spannplatte aufgebracht sein. Hierdurch kann die Kühleffizienz der Vorrichtung zur Spannungsversorgung verbessert werden.

Es ist aus Montagegründen zweckmäßig, wenn die Spannplatte vor der Kraftbeaufschlagung durch die Anzahl an Verbindungsmitteln eine der Kraftrichtung entgegengesetzt ausgebildete Wölbung aufweist. Hierdurch kann ein guter thermischer Kontakt in der Mitte der Längsachse einer jeweiligen Speicherzelle bzw. eines jeweiligen Speicherzellenmoduls erzielt werden. Typischerweise ist in diesem Bereich die Durchbiegung der Kühlplatte bzw. Spannplatte am größten. Um einer solchen Durchbiegung entgegen zu wirken, wird die Spannplatte, welche zur Verspannung dient, in die entgegengesetzte Richtung vorgebogen. Durch die Verspannung wird die Spannplatte in eine plane Form gebracht. Die Federkraft wirkt nun auf die Struktur zur Wärmeabfuhr und unterstützt damit die Erzeugung der erwünschten Kraft zwischen der Spannplatte und den jeweiligen Speicherzellenmodulen.

In einer alternativen Ausgestaltung ist die Anzahl an Verbindungsmitteln mit den auf gegenüberliegenden Seiten der Aufnahme angeordneten Kühlplatten kraft- und/oder formschlüssig miteinander verbunden. Bei dieser Ausgestaltung ist sichergestellt, dass die Kühlplatten ausreichend dimensioniert sind, um die durch die Verbindungsmittel aufgebrachten Kräfte aufnehmen zu können. Dies kann beispielsweise durch die Materialstärke der Kühlplatten oder lokale Verstärkungen im Bereich der Krafteinleitung sichergestellt werden. Andererseits wird die Struktur der Vorrichtung durch die stabilen Kühlplatten verbessert.

Es ist weiterhin vorgesehen, dass die Anzahl an Verbindungsmitteln direkt oder indirekt über eine oder mehrere Halteschienen, welche aus einem steifen Material gebildet sind, mit den Kühlplatten oder den Spannplatten verbunden sind. Durch das Vorsehen der Halteschienen braucht die Kraft nicht direkt in die Kühlplatten oder die Spannplatten eingeleitet werden. Vielmehr werden die Kräfte lokal in die Halteschienen eingeleitet und durch diese auf eine größere Fläche verteilt. Die Halteschienen können beispielsweise aus einem Metall oder einem entsprechend steifen Kunststoff gefertigt sein. Sie können auch in die Verspannplatten integriert sein. Die Halteschienen dienen ferner zur Fixierung des zumindest einen Kraftaufnahmeelements (senkrecht zur Kraftleitrichtung), indem deren Zapfen durch entsprechende Aussparungen der Halteschienen hindurchragen.

Zur Minimierung des für die erfindungsgemäße Vorrichtung benötigten Bauraums ist weiterhin vorgesehen, dass zumindest manche der Anzahl an Verbindungsmitteln durch die Aufnahme hindurchgeführt sind. Insbesondere kann ein jeweiliges Verbindungsmittel seitlich an einem Speicherzellenmodul oder zwischen zwei Speichermodulen vorbei geführt sein. Es ist dabei zweckmäßig, wenn sich das Kraftaufnahmeeiement und die Zapfen des Kraftaufnahmeelements in Richtung der Anzahl an Verbindungsmitteln erstrecken. Insbesondere ist es vorteilhaft, wenn die Verbindungsmittel und das Kraftaufnahmeelement räumlich zueinander angeordnet sind, um mit möglichst geringem Bauraum auskommen zu können.

Es ist ferner zweckmäßig, wenn in einem Speicherzellenmodul mit einer Mehrzahl an Speicherzellen und/oder Doppelschichtkondensatoren diese über thermisch leitende und mechanisch steife Profile verbunden sind, wobei die Spannvorrichtung die Struktur zur Wärmeabfuhr auf die Profile drückt. Die Profile können beispielsweise als Strangpressprofile aus Aluminium gebildet sein. Im Crashfall leiten die Profile eine auf die Vorrichtung wirkende Kraft um die Speicherzellen herum bzw. von den Speicherzellen ab. Neben den Kraftaufnahmeelementen sorgen die Profile damit für einen Schutz der Speicherzellen vor Beschädigung. Der weitere Zweck der Profile besteht darin, die Wärme von den Speicherzellen zu der Struktur zur Wärmeabfuhr zu leiten. Durch die Gestalt der Profile ist es dabei möglich, Wärme über eine große Fläche von den Speicherzellen abzuleiten.

Zur Fixierung der Vorrichtung an dem Fahrzeug kann die Spannvorrichtung gemäß einer weiteren vorteilhaften Ausgestaltung auf einer Seite der Aufnahme zumindest ein Festlager (z.B. in Gestalt einer Öse) und auf der anderen Seite der Aufnahme zumindest ein Loslager aufweisen. Durch die einseitige Fixierung der Vorrichtung ist sichergestellt, dass sich die Verspannplatten über die Lebensdauer nachsetzen können, wodurch die Kühlund Verspannplatten immer im thermischen Kontakt mit den Modulen bleiben. Andererseits bietet die einseitige Lagerung Vorteile im Crashfall, da eine Kraft nur auf einer Seite in die Vorrichtung eingeleitet wird, während die andere Seite bis zu einem gewissen Grad frei beweglich bleibt. Das Festlager und/oder das Gleitlager können wahlweise an einer der Spannplatten und/oder der Halteschienen ausgebildet sein. Zweckmäßigerweise befinden sich an einer Seitenwandung der Vorrichtung sämtliche Festlager, während auf der gegenüberliegenden Seitenwandung der Vorrichtung die Gleitlager vorgesehen sind.

Eine besonders einfache Handhabung und Montage der erfindungsgemäßen Vorrichtung ergibt sich dann, wenn der Kühlerblock selbsttragend ist. Auf diese Weise ist es möglich, unterschiedliche Komponenten der Vorrichtung von unterschiedlichen Herstellern zu beziehen und diese zu einem späteren Zeitpunkt miteinander zu vereinen. Insbesondere kann der Kühlerblock als separates Bauteil bereitgestellt werden. Die Speicherzellenmodule können dann beim Hersteller der Vorrichtung, z. B, beim Hersteller des Fahrzeugs oder der Speichermodule, in den Kühlerblock eingeführt und mit diesem verspannt werden.

Die Erfindung schafft auch einen Kühlerblock für eine Vorrichtung zur Spannungsversorgung eines Kraftfahrzeugs, insbesondere eines PKW, LKW oder Motorrads, wobei die Vorrichtung zur Spannungsversorgung ein oder mehrere Speicherzellenmodule aufweist, welche jeweils ein oder mehrere elektrochemische Speicherzellen und/oder Doppelschichtkondensatoren umfassen, die neben- und/oder übereinander angeordnet sind. Der Kühlerblock umfasst eine Aufnahme für das oder die Speicherzellenmodule und eine Struktur zur Wärmeabfuhr der von dem oder den Speicherzellenmodulen abgegebenen Wärme. Erfindungsgemäß umfasst der Kühlerblock eine Kraftaufnahmevorrichtung mit zumindest einem plattenförmigen Kraftaufnahmeelement, das zwischen zwei Speicherzellenmodulen (10) angeordnet ist und durch welches im Crashfall eine auf die Vorrichtung wirkende Kraft aufnehmbar und um die Speicherzellenmodule herum ableitbar ist.

Der erfindungsgemäße Kühlerblock, der im Wesentlichen eine Kombination aus Struktur zur Wärmeabfuhr und Spannvorrichtung darstellt, weist die gleichen Vorteile auf, wie diese in Verbindung mit der erfindungsgemäßen Vorrichtung beschrieben wurden.

Die Erfindung wird nachfolgend näher anhand von Ausführungsbeispielen in den Zeichnungen beschrieben. Es zeigen:
- Fig. 1: einen Schnitt durch einen schematischen, erfindungsgemäßen Kühlerblock,
- Fig. 2: eine teilweise Querschnittsdarstellung einer erfindungsgemäßen Vorrichtung zur Spannungsversorgung,
- Fig. 3: eine perspektivische Darstellung eines erfindungsgemäßen Kühlerblocks,
- Fig. 4: eine Darstellung eines in einem erfindungsgemäßen Kühlerblock verwendeten Kraftaufnahmeelements,
- Fig. 5: eine perspektivische, vergrößerte Darstellung eines erfindungsgemäßen Kühlerblocks im Bereich zweier aneinander grenzender Kraftaufnahmeelemente,
- Fig. 6: eine perspektivische und geschnittene Darstellung einer erfindungsgemäßen Vorrichtung zur Spannungsversorgung,
- Fig. 7: eine teilweise perspektivische Darstellung eines erfindungsgemäßen Kühlerblocks, aus der der Aufbau einer Spannvorrichtung ersichtlich ist,
- Fig. 8: eine bei einer Spannvorrichtung verwendete Halteschiene,
- Fig. 9: eine Querschnittsdarstellung der erfindungsgemäßen Kühlerblocks, welche dessen Befestigung an einem Karosseriebauteil verdeutlicht,
- Fig. 10: eine teilweise perspektivische Darstellung des erfindungsgemäßen Kühlerblocks, welche eine Loslagerung an dem Karosseriebauteil verdeutlicht, und
- Fig. 11a und 11b: eine schematische Draufsicht auf einen erfindungsgemäßen Kühlerblock, aus der das Vorgehen bei der Verspannung ersichtlich wird.

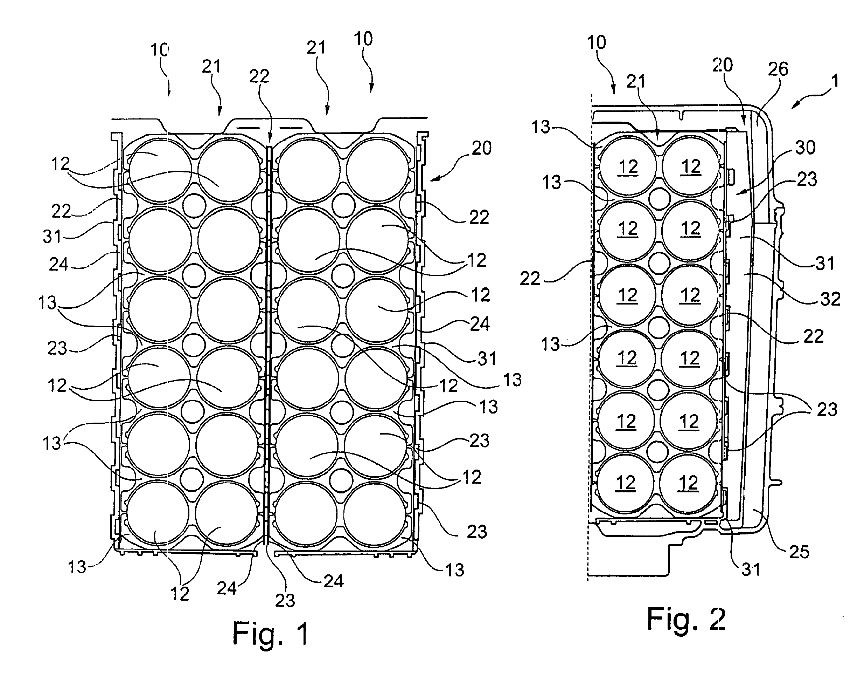

Fig. 1 zeigt eine Querschnittsdarstellung eines schematischen, erfindungsgemäßen Kühlerblocks 20. Der Kühlerblock 20 umfasst eine jeweilige Aufnahme 21 für beispielhaft zwei nebeneinander angeordnete Speicherzellenmodule 10. Jedes der Speicherzellenmodule 10 umfasst eine Anzahl an elektrochemischen Speicherzellen 12 und/oder Doppelschichtkondensatoren, die beispielhaft in zwei Reihen nebeneinander angeordnet sind. Jede Reihe umfasst lediglich beispielhaft sechs Speicherzellen 12 übereinander. Zur mechanischen Fixierung der Speicherzellen 12 sowie zur Verbesserung der Wärmeableitung sind die Speicherzellen 12 mit thermisch leitenden Profilen 13 gekoppelt. Die Profile 13 sind beispielsweise Strangpressprofile aus Aluminium. Die Querschnittsgestalt eines jeweiligen Profils 13 ist an die Gestalt der Speicherzellen 12 angepasst, wobei jeweils zwei nebeneinander liegende Speicherzellen 12 in einem Profil 13 zum Liegen kommen. Die im Ergebnis flügelförmigen Profile 13 sind dabei seitlich pian ausgeführt, so dass diese mit einer Kühlmittel oder Kältemittel führenden Struktur 22 des Kühlerblocks 20 in großflächigen Kontakt gebracht sind.

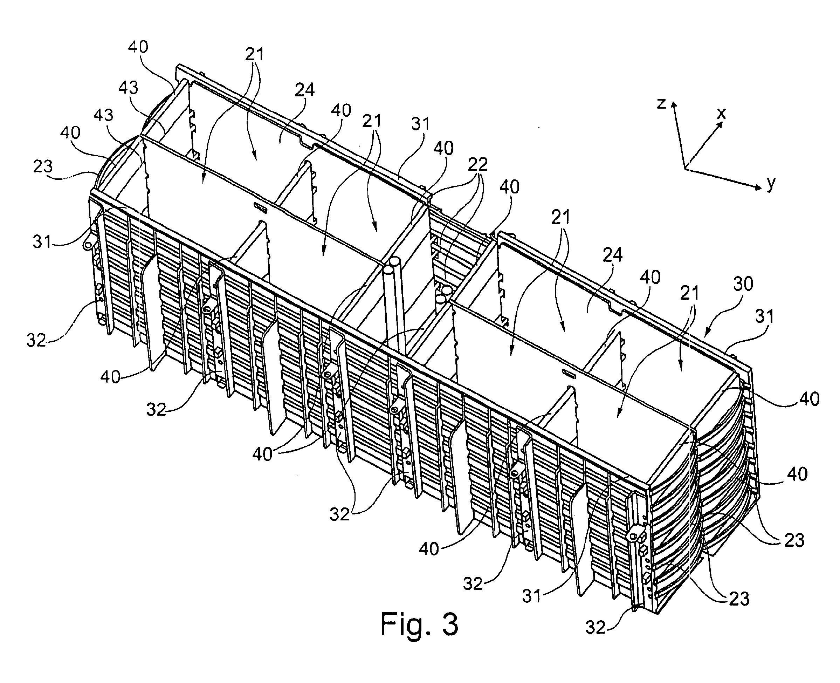

Die Kühlmittel oder Kältemittel führende Struktur 22 umfasst auf den gegenüberliegenden Seiten einer jeweiligen Aufnahme 21 jeweils eine Kühlplatte 24, auf deren von den Speicherzellenmodulen 10 abgewandten Seiten sich eine Anzahl an Kühlkanälen 23 erstreckt. Die Kühlplatten bestehen vorzugsweise aus Aluminium. Die Kühlkanäle 23 können beispielsweise als Multiport-Tubes (sog. Flachrohre) ausgeführt sein. Die Kühlkanäle 23 erstrecken sich parallel zu einer Längsachse einer jeweiligen Speicherzelle in die Blattebene hinein. Um die zwischen den zwei Speicherzellenmodulen 10 doppelt anfallende Wärme abtransportieren zu können, ist optional zwischen den zwei, einem jeweiligen Speicherzellenmodul 10 zugeordneten Kühlplatten 24 die doppelte Anzahl an Kühlkanälen 23 vorgesehen. Dies ergibt sich auch daraus, dass auf den gegenüberliegenden Seiten einer jeweiligen Aufnahme 21 angeordneten Kühlkanäle über an der Stirnseite der Aufnahme 21 bogenförmig ausgebildete Kühlkanalabschnitte (vgl. Fig. 3) strömungstechnisch miteinander verbunden sind.

Auf den Außenseiten der Kühlmittel oder Kältemittel führenden Struktur 22 ist jeweils eine Spannplatte 31 vorgesehen, welche über eine in Fig. 1 nicht dargestellte Anzahl an Verbindungsmitteln miteinander verbunden sind. Durch die Spannplatten 31 wird eine Kraft erzeugt, durch die die Kühlmittel oder Kältemittel führende Struktur 22, d.h. die Kühlplatten 24, an ein jeweiliges Speicherzellenmodul 10 gepresst werden. Die Spannplatten 31 sowie die nicht dargestellten Verbindungsmittel sind Bestandteil einer Spannvorrichtung 30, welche zusammen mit der Kühlmittel oder Kältemittel führenden Struktur 22 den Kühlerblock 20 ausbildet. Die Verbindungsmittel verbinden die Spannplatten 31 kraft-und/oder formschlüssig miteinander. Die Spannplatten 31 sind bevorzugt aus einem Metall oder einem Kunststoff gebildet. Insbesondere sind die Spannplatten 31 aus einem Material gefertigt, welches thermisch isolierend ist, um eine Abfuhr der in den Speicherzellen entstehenden Wärme durch die Kühlmittel oder Kältemittel führende Struktur 22 zu ermöglichen bzw. unterstützen. Wird als Material für die Spannplatten 31 Metall verwendet, so ist dieses, um die thermische Isolation bereit stellen zu können, mit einer Isolationsbeschichtung zu versehen.

Wie aus der Schnittdarstellung der Fig. 1 ohne Weiteres ersichtlich ist, sind die Spannplatten 31 unter die jeweiligen Speicherzellenmodule 10 herum gezogen. Die Spannplatten 31 bilden in diesem unteren Bodenbereich einen Abschluss des Kühlerblocks 20 aus. Durch die Formgebung der Spannplatten 31 wird darüber hinaus die Eigenstabilität des Kühlerblocks 20 verbessert. Es ist bevorzugt, wenn der Kühlerblock 20 eine selbsttragende Struktur aufweist, da dann die Handhabung und Fertigung einer erfindungsgemäßen Vorrichtung zur Spannungsversorgung auf besonders einfache Weise möglich ist. Es ist deshalb gegebenenfalls auch zweckmäßig, wenn die Spannplatten 31 auf ihrer von den Speicherzellenmodulen 10 abgewandten Seitenflächen mit einer Profilierung versehen sind, welche z.B. - wie in Fig. 1 gezeigt - zur Aufnahme der Kühlkanäle dienen kann und eine verbesserte Stabilität und Steifigkeit der Spannplatten 31 und damit des Kühlerblocks 20 ermöglicht.

Durch die Spannvorrichtung 30 in Gestalt der Spannplatten 31 sowie der diese verbindende Verbindungsmittel wird somit eine Kraft erzeugt, durch die die Kühlmittel oder Kältemittel führende Struktur 22 an ein jeweiliges Speicherzellenmodul 10 gepresst werden. Genauer werden die Kühlplatten 24 an die Wärme leitenden Profile 13 der Speicherzellenmodule 10 gepresst. Durch den aufgebrachten Mindestdruck zwischen den Komponenten können Lufteinschlüsse, welche einen hohen thermischen Widerstand aufweisen, vermieden werden. Hierdurch wird ein guter thermischer Kontakt zwischen den Wärme ableitenden Profilen 13 und der Kühlmittel oder Kältemittel führenden Struktur 22 hergestellt, so dass eine gute Kühlung der Speicherzellen 12 gewährleistet ist. Durch den Druck der Spannvorrichtung werden weiterhin Relativbewegungen der Bauteile zueinander verhindert, da aufgrund der aufgebrachten Kraft ein Reibschluss gegeben ist.

Sofern die Spannplatten 31 aus einem Stahlblech gefertigt sind und die Kühlplatten 24 aus Aluminium besteht, wird zur Vermeidung von Korrosion eine korrosionshemmende Schicht zwischen den Spannplatten 31 und der Kühlmittel oder Kältemittel führenden Struktur 22 vorgesehen. Die korrosionshemmende Schicht kann beispielsweise auf die Spannplatten 31 aufgebracht sein. Auf das Vorsehen einer solchen korrosionshämmenden Schicht kann verzichtet werden, wenn die Spannplatten z.B. aus Edelstahl oder Kunststoff gefertigt werden.

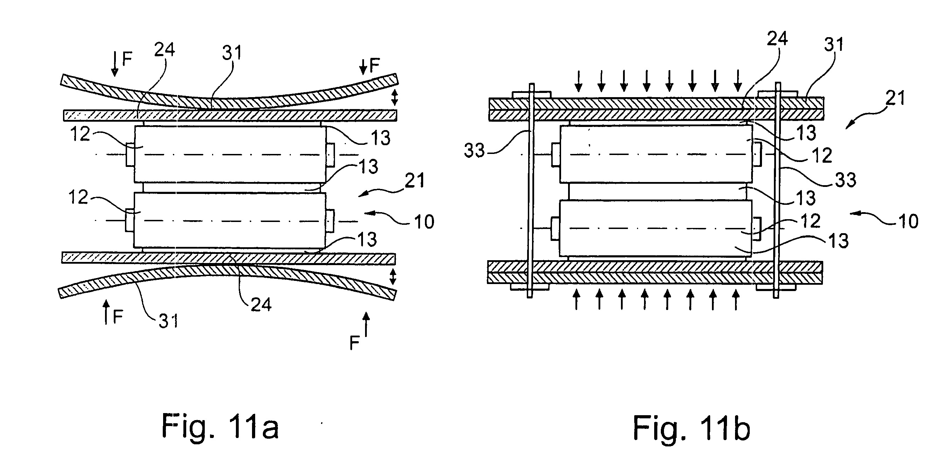

Um einen guten thermischen Kontakt in Erstreckungsrichtung der Speicherzellen 12 (d.h. in die Blattebene hinein) herzustellen, muss die Durchbiegung des Kühlerblocks 20 und insbesondere der Spannplatten 31 berücksichtigt werden. Um einer solchen Durchbiegung entgegen zu wirken, werden die Spannplatten 31 in die der späteren Kraftrichtung entgegengesetzten Richtung vorgebogen. Dies ist schematisch in Fig. 11a in einer Draufsicht dargestellt, wobei der Kühlerblock im Ausführungsbeispiel zur Aufnahme eines einzigen Speicherzellenmoduls 10 ausgebildet ist. Fig. 11 a ist hierbei ohne Weiteres zu entnehmen, dass die Spannplatten 31 ohne Kraftbeaufschlagung durch die Verbindungsmittel im Bereich der Enden einer jeweiligen Speicherzelle 12 beabstandet zu der zugeordneten Kühlplatte 24 ausgebildet sind. Durch die Verspannung der Spannplatten 31 mittels der Verbindungsmittel 33 werden die Spannplatten gerade gebogen und eine Federkraft der Spannplatten wirkt zusätzlich auf die Kühlplatten des Kühlerblocks 20. Dies ist schematisch in Fig. 11b dargestellt, aus der weiterhin gut ersichtlich ist, dass die Verbindungselemente 33 seitlich an dem Speicherzellenmodul 10 vorbeigeführt sind. Diese in Fig. 11b dargestellte Designvariante ist einerseits aus Bauraumminimierungsgründen und andererseits aus thermischen Gründen bevorzugt.

Ein Verbindungsmittel 33 umfasst beispielsweise eine Schraube, die in eine zylinderförmig ausgebildete Mutter mit einem Innengewinde eingreift. Dabei beaufschlagt die Mutter die Spannplatte 31 auf einer Seite der Aufnahme 21 bzw. des Speicherzellenmoduls 10 und die Schraube die Spannplatte 31 auf der gegenüberliegenden Seite der Aufnahme 21 bzw. Speicherzellenmoduls 10 mit Kraft. Der Zylinderabschnitt der Mutter ist bevorzugt derart ausgebildet, dass die Schraube bei der durch sie erzeugten vorgegebenen Kraft nicht über ein hinteres Ende der Mutter hinausragt. Hierdurch steht ein ausreichend großer Betätigungsweg für die Schraube zur Verfügung, ohne dass diese über eine Seitenfläche der Vorrichtung zur Spannungserzeugung hinausragt. Durch ausreichende Dimensionierung der Länge der Mutter kann darüber hinaus eine Vormontage erfolgen, gemäß der die Schraube und die Mutter bereits miteinander verbunden sind, bevor die Speicherzellenmodule in die jeweilige Aufnahme des Kühlerblocks eingebracht werden. Zur Erzeugung der vorgegebenen Kraft brauchen die Schrauben lediglich weiter in die Muttern hineingedreht werden.

Grundsätzlich sind auch anders ausgestaltete Verbindungsmittel in einer erfindungsgemäßen Vorrichtung zur Spannungsversorgung denkbar, solange sichergestellt ist, dass die vorgegebene Kraftbeaufschlagung auf die Kühlmittel oder Kältemittel führende Struktur erfolgt. Insbesondere könnte das Verbindungsmittel auch durch eine vercrimpte Federstahlspeiche gebildet sein.

Fig. 2 zeigt eine teilweise Querschnittsdarstellung einer erfindungsgemäßen Vorrichtung zur Spannungsversorgung. In dieser Darstellung ist lediglich das rechte in Fig. 1 gezeigte Speicherzellenmodul 10 in seiner Aufnahme 21 des Kühlerblocks 20 dargestellt. Weiterhin ersichtlich ist ein den Kühlerblock 20 umgebendes Gehäuse. Dieses ist aus einem ersten Gehäuseteil 25, einer Gehäusewanne, und einem zweiten Gehäuseteil 26, einem Gehäusedeckel, gebildet. Das erste und zweite Gehäuseteil 25, 26 können beispielsweise aus einem Kunststoff oder Aluminium-Guss gefertigt sein. Der mit den Speicherzellenmodulen 10 bestückte Kühlerblock 20 kann, nachdem die Verspannung über die beschriebene Spannvorrichtung erfolgte und die Herstellung sämtlicher elektrischer Verbindungen der Speicherzellenmodule vorgenommen wurde in das erste Gehäuseteil 25 eingebracht und mit dem zweiten Gehäuseteil 26 verschlossen werden. In Fig. 2 ist ferner eine Halteschiene 32 der Spannvorrichtung 30 ersichtlich. Entlang einer jeweiligen Seitenfläche des Kühlerblocks 20 ist eine Mehrzahl derartiger Halteschienen 32 vorgesehen. Die aus einem steifen Material gebildeten Halteschienen 32 dienen dazu, die Verbindungsmittel 33 indirekt mit den Spannplatten 31 zu verbinden. Die durch die Verbindungselemente aufgebrachte Kraft wirkt somit nicht unmittelbar auf die Spannplatten 31, sondern auf die Halteschienen 32, wodurch die Kraft über die Fläche der Halteschienen verteilt und auf die Spannplatten 31 übertragen wird.

Aus der beschriebenen Funktionalität der Halteschienen 32 ergibt sich somit bereits, dass diese im Bereich zwischen in Längsrichtung benachbarten Speicherzellenmodulen angeordnet sind.

Dies wird besser aus der perspektivischen Darstellung eines erfindungsgemäßen Kühlerblocks 20 in Fig. 3 ersichtlich. Der Kühlerblock 20 umfasst beispielhaft acht Aufnahmen 21 für ein jeweiliges Speicherzellenmodul. Vier Aufnahmen 21 sind in zwei Reihen nebeneinander in Längsrichtung angeordnet. Gemäß dem eingezeichneten Koordinatensystem entspricht die Längsrichtung des Kühlerblocks 20 einer Fahrzeugquerachse (y-Achse des Koordinatensystems). Aus der perspektivischen Darstellung sind die längs der Spannplatten 31 verteilten Halteschienen 32 gut ersichtlich. Die Halteschienen 32 sind seitlich oder zwischen zwei Aufnahmen 21 angeordnet.

An den Stirnseiten des Kühlerblocks 20 verlaufen die eingangs bereits erwähnten flexiblen und beispielhaft bogenförmig ausgeführten Kühlkanäle 23, die die auf den gegenüberliegenden Seiten einer Aufnahme 21 gelegenen und mit den Kühlplatten 24 verbundenen Kühlkanäle 23 miteinander verbinden. Der bogenförmige Verlauf der Kühlkanäle 23 an den Stirnseiten einer jeweiligen Aufnahme 21 ermöglicht eine gewisse Flexibilität der Kühlkanäle 23 bei der Kraftbeaufschlagung der Kühlmittel oder Kältemittel führenden Struktur durch die Spannvorrichtung 30. Durch den bogenförmigen Verlauf der Kühlkanäle 23 der Aufnahmen 21 kann die Zuverlässigkeit nach der Montage der Vorrichtung verbessert werden.

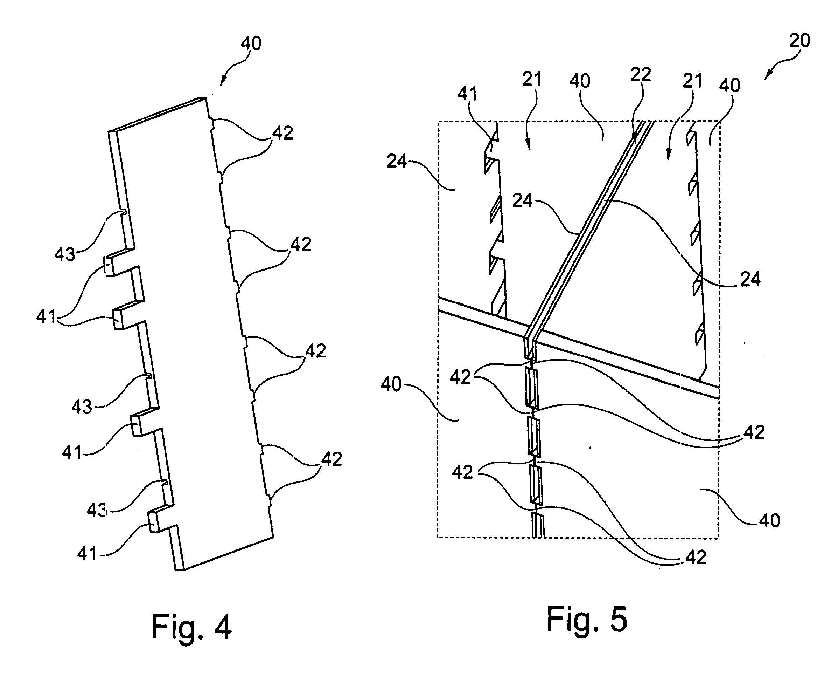

In x-Richtung des in Fig. 3 eingezeichneten Koordinatensystems (d.h. in Fahrzeuglängsachse) sind zwischen zwei Halteschienen 32 jeweils zwei, nachfolgend als Crashplatten 40 bezeichnete Kraftaufnahmeelemente angeordnet. Die Crashplatten 40 begrenzen zusammen mit der Kühlmittel oder Kältemittel führenden Struktur 22 jeweils eine Aufnahme 21 für ein Speicherzellenmodul 10. Die Anordnung der Crashplatten 40 geht deutlicher aus den Fig. 4 bis 6 hervor.

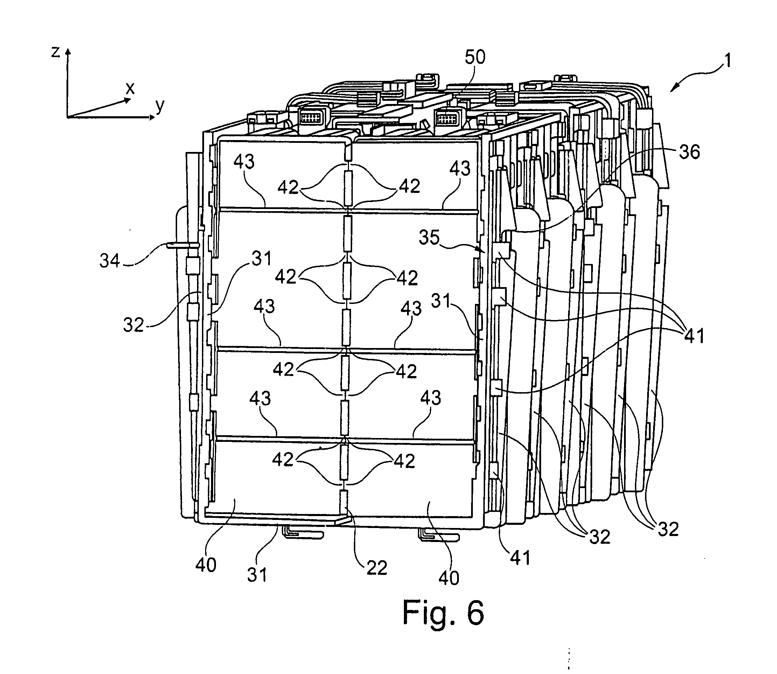

In Fig. 4 ist eine Crashplatte 40 vergrößert dargestellt. Die Crashplatte 40 weist entlang ihrer einen Seitenkante als Crashzapfen bezeichnete Vorsprünge 41 auf. Entlang der gegenüberliegenden Seitenkante weist die Crashplatte 40 ebenfalls als Crashzapfen 42 bezeichnete Vorsprünge auf, die jedoch im Vergleich zu den Crashzapfen 41 wesentlich kürzer sind. Die Crashzapfen 41 erstrecken sich durch die Kühlmittel oder Kältemittel führende Struktur, d.h. die Kühlplatte 24, die Spannplatte 31 sowie die Halteschiene 32, hindurch (vgl. Fig. 5 und 6). Die Anzahl der Crashzapfen 41 bzw. 42 kann jeweils beliebig gewählt sein.

Die Crashzapfen 41 dienen im Falle eines Fahrzeugcrashs dazu, auf die Vorrichtung wirkende Kräfte aufzunehmen und um die einzelnen Speicherzellen 10 eines jeweiligen Speicherzellenmoduls 12 herum zu leiten. Den gleichen Zweck erfüllen die kürzeren Crashzapfen 42, welche in Kontakt mit korrespondierenden Crashzapfen 42 einer benachbarten Crashplatte 40 stehen. Dies kann beispielsweise den perspektivischen Darstellungen der Fig. 5 und 6 entnommen werden. Durch die Crashzapfen 42 wird sichergestellt, dass im Falle eines Crashs auftretende Kräfte vollständig durch die Vorrichtung 1 hindurchgeleitet werden. Insbesondere kann auch eine Verformung der in y-Richtung in der Mitte angeordneten Kühlplatten 31 vermieden werden.

Fig. 6 zeigt eine perspektivische und geschnittene Darstellung einer erfindungsgemäßen Vorrichtung 1 zur Spannungsversorgung. Aus der geschnittenen Darstellung sind die Anordnung und die Ausgestaltung der in x- (Fahrzeuglängsrichtung) oder y-Richtung (Fahrzeugquerachsenrichtung) hintereinander angeordneten Crashplatten 40 gut ersichtlich. Dabei geht die Anordnung der Crashzapfen 41 und 42 relativ zu der Kühlmittel oder Kältemittel führenden Struktur 22, der Spannplatte 31 sowie der Halteschiene 32 und der Crashzapfen 42 zweier Crashplatten 40 zueinander gut hervor. Die Crashplatten 40 weisen jeweils eine Nut 43 auf, welche sich in x-Richtung über die gesamte Breite des Kühlerblocks 20 bzw. der Vorrichtung 1 erstreckt. Die Nuten 30 dienen zur Führung und Aufnahme der Verbindungsmittel 33 (in Fig. 6 nicht dargestellt), wodurch eine weitere Bauraumminimierung in y-Richtung des Kühlerblocks 20 erzielt wird.

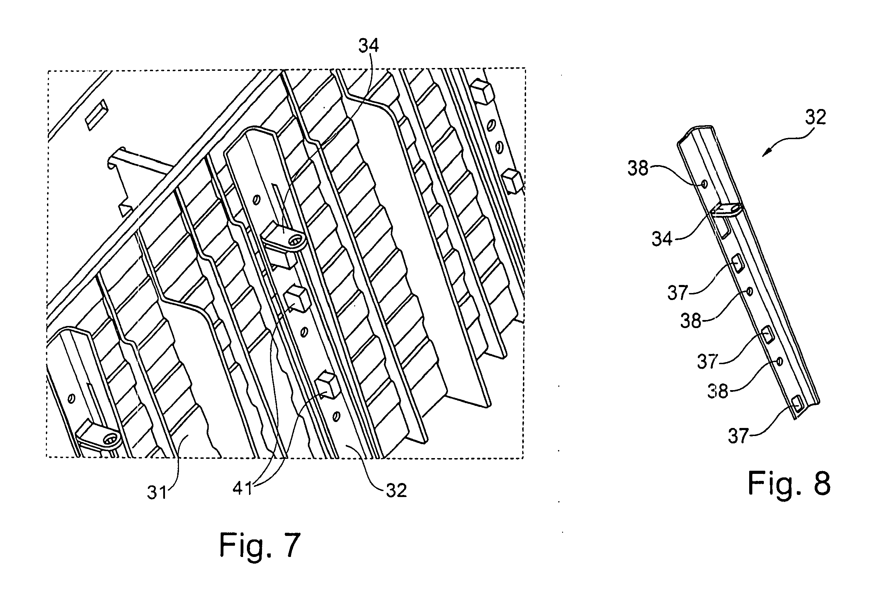

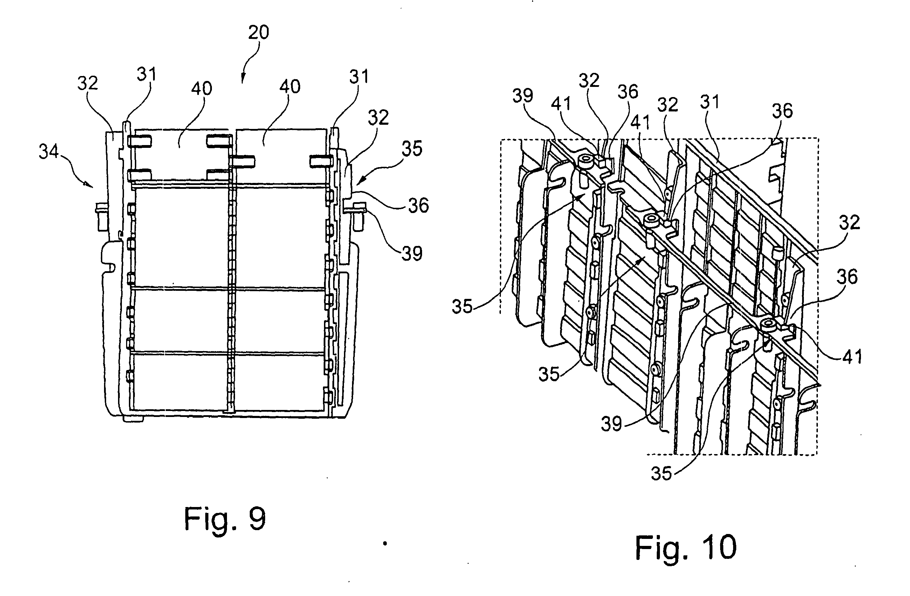

Die Spannvorrichtung ermöglicht darüber hinaus eine vereinfachte Montage der Vorrichtung in einem Fahrzeug. Die Montage erfolgt an den Halteschienen 32, welche auf gegenüberliegenden Seiten des Kühlerblocks 20 angeordnet sind. Hierzu weisen die Halteschienen 32 auf einer Seitenfläche des Kühlerblocks 20 jeweils ein Festlager 34 auf, welches durch einen aus der Halteschiene 32 herausgebogenen Abschnitt mit einer Öse gebildet ist. Dies geht beispielsweise deutlicher aus den Fig. 7, 8 und 9 hervor. An den Ösen können die Halteschienen und damit der Kühlerblock 20 an einem Karosseriebauteil des Fahrzeugs verschraubt werden. An den gegenüberliegenden Halteschienen 32 (vgl. Fig. 9 und 10) ist jeweils ein Auf- oder Loslager 35 vorgesehen, welches eine Gleitbewegung in x-Richtung zulässt. In y-Richtung und z-Richtung wird dagegen eine Bewegung unterbunden. Das Loslager 35 ist durch das Zusammenwirken einer Nut 36 in der Halteschiene 32 und eines Crashzapfens 41 gebildet, wobei in dem zwischen dem Crashzapfen 41 und der Nut 36 gebildeten Schlitz ein Blech 39 des Karosseriebauteils des Fahrzeugs aufgenommen werden kann. Dies ist in der perspektivischen Darstellung der Fig. 10 gezeigt.

Die Spannvorrichtung 30 ermöglicht darüber hinaus die Aufnahme eines elektronischen Bauelements 50, beispielsweise einer elektronischen Steuerung der Vorrichtung 1 zur Spannungsversorgung. Alternativ oder zusätzlich können elektronische Bauelemente auch auf den jeweiligen Speicherzellenmodulen 10 vorgesehen sein. Ebenso ist es möglich, die elektronischen Bauelemente an oder auf dem ersten oder zweiten Gehäuseteil 25, 26 vorzusehen.

Aus der vergrößerten Darstellung der Fig. 7 geht der prinzipielle Aufbau des Kühlerblocks nochmals deutlich hervor. Insbesondere ist gut ersichtlich, dass die Crashzapfen 41 nicht nur die Kühlmittel oder Kältemittel führende Struktur 22 und die Spannplatte 31 durchdringen, sondern auch durch Aussparungen 37 in den Halteschienen 32 ragen. Darüber hinaus ist der das Festlager 34 ausbildende Blechabschnitt mit der Öse gut zu erkennen.

In Fig. 8 sind neben den rechteckigen Ausnehmungen 37 runde Ausnehmungen 38 vorgesehen. Durch die runden Ausnehmungen 38 werden die Verbindungsmittel 33 geführt, um die vorgegebene Kraft zu erzeugen, mit der die Kühlmittel oder Kältemittel führende Struktur 22 an ein jeweiliges Speicherzellenmodul 10 gepresst wird. In Fig. 7 ist ersichtlich, dass die runden Aussparungen 38 auf Höhe der Nuten 43 in den Crashplatten 40 gelegen sind, um die Führung der Verbindungsmittel in einer jeweiligen Nut 43 zu ermöglichen.

Der erfindungsgemäße, beschriebene Kühlerblock 20 weist vorzugsweise eine selbsttragende Struktur auf, wodurch die Handhabung und Montage erleichtert wird. Hierzu wird der Kühlerblock mit zunächst noch aufgeweiteten Spannplatten bereitgestellt. Die bereits fertig gestellten Speicherzellenmodule 10, welche insbesondere die eingangs beschrieben Profile 13 umfassen, werden in jeweilige Aufnahmen des Kühlerblocks 20 eingebracht. Anschließend wird die Verspannung vorgenommen. Die derart vorbereitete Vorrichtung kann dann in die beiden Gehäuseteile eingebracht werden.

In den oben beschriebenen Ausführungsbeispielen wurde die Spannvorrichtung in Verbindung mit zu der Kühlmittel oder Kältemittel führenden Struktur separaten Spannplatten beschrieben. Sofern die Kühlplatten der Kühlmittel oder Kältemittel führenden Struktur ausreichend stabil sind, kann die Verspannung unter Umständen auch über die Kühlplatten selbst vorgenommen werden. Hierzu werden zur Kraftverteilung zweckmäßigerweise die beschriebenen Halteschienen verwendet, welche direkt in Kontakt mit den Kühlplatten stehen und diese an die jeweiligen Speicherzellenmodule pressen. Sofern die Kühlplatten eine ausreichende Steifigkeit aufweisen, können die Halteschienen entfallen.

Der Vorteil des efindungsgemäßen Vorgehens besteht in einem guten thermischen Kontakt sämtlicher im Wärmeleitpfad vorhandener Bauelemente (Speicherzelle - Profil - Kühlplatte - Kühlkanäle). Dabei kann der thermische Kontakt über die gesamte Lebensdauer der Vorrichtung aufrecht erhalten werden. Die Realisierung ist auf einfache und kostengünstige Weise möglich. Insbesondere sorgt die Verspannung auch für eine Stabilisierung der Kühlmittel oder Kältemittel führenden Struktur nach deren Verspannung. Durch das Vorsehen der Crashplatten ist ein Schutz der Speicherzellen gegen eindringende Teile im Crashfall gegeben.

**Bezugszeichenliste**

| | |
|---|---|
| 1 | Vorrichtung zur Spannungsversorgung |
| 10 | Speicherzellenmodul |
| 12 | Speicherzelle |
| 13 | Profil |
| 20 | Kühlerblock |
| 21 | Aufnahme für Speicherzellenmodul 10 |
| 22 | Kühlmittel führende Struktur |
| 23 | Kühlkanal |
| 24 | Kühlplatte |
| 25 | Gehäuseteil (Gehäusewanne) |
| 26 | Gehäuseteil (Gehäusedeckel) |
| 30 | Spannvorrichtung |
| 31 | Spannplatte |
| 32 | Halteschiene |
| 33 | Verbindungsmittel |
| 34 | Festlager (Öse) |
| 35 | Loslager |
| 36 | Nut in der Halteschiene 32 |
| 37 | Ausnehmung |
| 38 | Ausnehmung |
| 40 | Crashplatte |
| 41 | Crashzapfen (nach außen erstreckend) |
| 42 | Crashzapfen (nach innen erstreckend) |
| 43 | Nut zur Aufnahme / Führung des Verbindungsmittels 33 |
| 50 | elektronisches Bauelement |

## Patentansprüche

1. Vorrichtung (1) zur Spannungsversorgung eines Kraftfahrzeugs, insbesondere eines Pkw, Lkw oder eines Motorrads, mit einem oder mehreren Speicherzellenmodulen (10), welche jeweils ein oder mehrere elektrochemische Speicherzellen (12) und/oder Doppelschichtkondensatoren umfassen, die neben- und/oder übereinander angeordnet sind, und mit einem Kühlerblock (20), der eine Aufnahme (21) für das oder die Speicherzellenmodule (10) und eine Struktur (22) zur Wärmeabfuhr der von dem oder den Speicherzellenmodulen (10) abgegebenen Wärme umfasst,
wobei der Kühlerblock (20) eine Kraftaufnahmevorrichtung mit zumindest einem plattenförmigen Kraftaufnahmeelement (40) umfasst, das zwischen zwei Speicherzellenmodulen (10) angeordnet ist **dadurch gekennzeichnet, dass** durch das Kraftaufnahmeelement (40) im Crashfall eine auf die Vorrichtung (1) wirkende Kraft aufgenommen und um die Speicherzellenmodule (10) herum abgeleitet wird.

2. Vorrichtung nach Anspruch 1, **dadurch gekennzeichnet, dass** das zumindest eine Kraftaufnahmeelement (40) jeweils zumindest abschnittsweise über den Kühlerblock (20) hinaus ragt.

3. Vorrichtung nach Anspruch 1 oder 2, **dadurch gekennzeichnet, dass** das zumindest eine Kraftaufnahmeelement (40) zur Kraftleitung mit einem oder mehreren, den Kühlerblock (20) umgebenden Bauteil oder Bauteilen zusammenwirkt.

4. Vorrichtung nach einem der vorhergehenden Ansprüche, **dadurch gekennzeichnet, dass** das zumindest eine Kraftaufnahmeelement (40) seitlich an einem der Speicherzellenmodule (10) vorbei geführt ist.

5. Vorrichtung nach einem der vorherigen Ansprüche, **dadurch gekennzeichnet, dass** zumindest zwei Kraftaufnahmeelemente (40), welche jeweils unterschiedlichen und benachbarten Aufnahmen (21) zugeordnet sind, in einer Kraftleitrichtung hintereinander angeordnet sind.

6. Vorrichtung nach einem der vorherigen Ansprüche, **dadurch gekennzeichnet, dass** das zumindest eine Kraftaufnahmeelement (40) Zapfen (41, 42) aufweist, welche durch den Kühlerblock (20) hindurch geführt sind und über diesen hinaus ragen.

7. Vorrichtung nach Anspruch 5 und 6, **dadurch gekennzeichnet, dass** die jeweiligen Zapfen (41, 42) der hintereinander angeordneten Kraftaufnahmeelemente (40) zur Kraftleitung aneinander grenzend angeordnet sind.

8. Vorrichtung nach einem der vorherigen Ansprüche, **dadurch gekennzeichnet, dass** sich das zumindest eine Kraftaufnahmeelement (40) in Richtung einer Fahrzeuglängsachse oder einer Fahrzeugquerachse erstreckt, wenn die Vorrichtung in dem Fahrzeug verbaut ist.

9. Vorrichtung nach einem der vorherigen Ansprüche, **dadurch gekennzeichnet, dass** die Struktur (22) zur Wärmeabfuhr zumindest auf einer Seite der Aufnahme (21) vorgesehen ist und der Kühlerblock (20) eine Spannvorrichtung (30) umfasst, welche dazu ausgebildet ist, eine vorgegebene Kraft (F) zu erzeugen, durch die die Struktur (22) zur Wärmeabfuhr an ein jeweiliges Speicherzellenmodul (10) pressbar ist.

10. Vorrichtung nach Anspruch 9, **dadurch gekennzeichnet, dass** die Spannvorrichtung (30) eine Anzahl an Verbindungsmitteln (33) umfasst, welche dazu ausgebildet ist, die vorgegebene Kraft zu erzeugen und direkt oder indirekt auf die Struktur (22) zur Wärmeabfuhr zu übertragen.

11. Vorrichtung nach Anspruch 9 oder 10, **dadurch gekennzeichnet, dass** die Struktur (22) zur Wärmeabfuhr zumindest auf den gegenüberliegenden Seiten der Aufnahme (21) jeweils eine Kühlplatte (24) mit Kühlkanälen für ein Kühlmittel oder ein Kältemittel umfasst, die an einer Stirnseite der Aufnahme (21) über flexible Kühlkanäle strömungstechnisch verbunden sind.

12. Vorrichtung nach Anspruch 10 oder 11, **dadurch gekennzeichnet, dass** auf den von dem oder den Speicherzellenmodulen (10) abgewandten Seiten der Struktur (22) zur Wärmeabfuhr jeweils eine Spannplatte (31) vorgesehen ist, wobei die Anzahl an Verbindungsmitteln (33) die Spannplatten (31) kraft- und/oder stoffschlüssig miteinander verbindet.

13. Vorrichtung nach Anspruch 11, **dadurch gekennzeichnet, dass** die Anzahl an Verbindungsmitteln (33) mit den auf gegenüberliegenden Seiten der Aufnahme (21) angeordneten Kühlplatten (24) kraft- und/oder formschlüssig miteinander verbunden ist.

14. Vorrichtung nach Anspruch 12 oder 13, **dadurch gekennzeichnet, dass** die Anzahl an Verbindungsmittel (33) direkt oder indirekt über eine oder mehrere Halteschienen (32), welche aus einem steifen Material gebildet sind, mit den Kühlplatten (24) oder den Spannplatten (31) verbunden sind.

15. Vorrichtung nach einem der Ansprüche 10 bis 14, **dadurch gekennzeichnet, dass** zumindest manche der Anzahl an Verbindungsmitteln (33) durch die Aufnahme (21) hindurch geführt sind.

16. Vorrichtung nach Anspruch 15, **dadurch gekennzeichnet, dass** ein jeweiliges Verbindungsmittel (33) seitlich an einem Speicherzellenmodul (10) vorbei oder zwischen zwei Speicherzellenmodulen (10) geführt ist.

17. Vorrichtung nach Anspruch 15 oder 16, **dadurch gekennzeichnet, dass** sich die Kraftaufnahmeelemente (40) und die Zapfen (41, 42) der Kraftaufnahmeelemente (40) in Richtung der Anzahl an Verbindungsmitteln (33) erstrecken.

18. Vorrichtung nach einem der Ansprüche 9 bis 17, **dadurch gekennzeichnet, dass** in einem Speicherzellenmodul (10) mit einer Mehrzahl an Speicherzellen (12) und/oder Doppelschichtkondensatoren diese über thermisch leitende und mechanisch steife Profile verbunden sind, wobei die Spannvorrichtung (30) die Struktur (22) zur Wärmeabfuhr auf die Profile drückt.

19. Vorrichtung nach einem der vorherigen Ansprüche, **dadurch gekennzeichnet, dass** zur Fixierung der Vorrichtung an dem Fahrzeug die Spannvorrichtung (30) auf einer Seite der Aufnahme (21) zumindest ein Festlager und auf der anderen Seite der Aufnahme (21) zumindest ein Loslager aufweist.

20. Vorrichtung nach einem der vorherigen Ansprüche, **dadurch gekennzeichnet, dass** der Kühlerblock (20) selbsttragend ist.

21. Kühlerblock (20) für eine Vorrichtung zur Spannungsversorgung eines Kraftfahrzeugs, insbesondere eines Pkw, Lkw oder eines Motorrads, wobei die Vorrichtung zur Spannungsversorgung ein oder mehrere Speicherzellenmodule (10) aufweist, welche jeweils ein oder mehrere elektrochemische Speicherzellen (12) und/oder Doppelschichtkondensatoren umfassen, die neben- und/oder übereinander angeordnet sind, wobei der Kühlerblock folgendes umfasst:
eine Aufnahme (21) für das oder die Speicherzellenmodule (10) und eine Struktur (22) zur Wärmeabfuhr der von dem oder den Speicherzellenmodulen (10) abgegebenen Wärme,
wobei der Kühlerblock (20) eine Kraftaufnahmevorrichtung mit zumindest einem plattenförmigen Kraftaufnahmeelement (40) umfasst, das zwischen zwei Speicherzellenmodulen (10) angeordnet is **dadurch gekennzeichnet, dass** durch das Kraftaufnahmeelement (40) im Crashfall eine auf die Vorrichtung (1) wirkende Kraft aufnehmbar und um die Speicherzellenmodule (10) herum ableitbar ist.

## Claims

1. A device (1) for supplying voltage to a motor vehicle, especially a car, lorry or motorcycle, comprising one or more storage cell modules (10) each comprising one or more electrochemical storage cells (12) and/or double-layer capacitors disposed alongside and/or above one another, also comprising a radiator core (20) comprising a holder (21) for the storage cell module or modules (10) and a structure (22) for dissipating the heat given off by the storage cell module or modules (10),
wherein the radiator core (20) comprises a force-absorbing device comprising at least one plate-shaped force absorbing element (40) disposed between two storage cell modules (10), **characterised in that** in the event of a crash a force acting on the device (1) is absorbed by the force absorbing element (40) and is discharged around the storage cell modules (10).

2. A device according to claim 1, **characterised in that** the at least one force absorbing element (40), or at least parts of it, projects over the radiator core (20).

3. A device according to claim 1 or claim 2, **characterised in that** the at least one force-absorbing element (40) transmits force in co-operation with one or more components surrounding the radiator block (20).

4. A device according to any of the preceding claims, **characterised in that** the at least one force absorbing element (40) is guided alongside one of the storage cell modules (10).

5. A device according to any of the preceding claims, **characterised in that** at least two force absorbing elements (40) respectively associated with different neighbouring holders (21) are disposed one behind the other in a direction of transmission of force.

6. A device according to any of the preceding claims, **characterised in that** the at least one force absorbing element (40) has pegs or lugs (41, 42) which extend through the radiator core (20) and project beyond it.

7. A device according to claim 5 and claim 6, **characterised in that** the lugs (41, 42) of the force absorbing elements (40) disposed one behind the other are placed adjoining one another in order to transmit force.

8. A device according to any of the preceding claims, **characterised in that** the at least one force absorbing element (40) extends in the direction of a longitudinal axis or transverse axis of the vehicle when the device is incorporated in the vehicle.

9. A device according to any of the preceding claims, **characterised in that** the heat-dissipating structure (22) is disposed on at least one side of the holder (21) and the radiator core (20) comprises a clamping device (30) designed to generate a set force (F) for pressing the heat-dissipating structure (22) against a respective storage cell module (10).

10. A device according to claim 9, **characterised in that** the clamping device (30) has a number of connecting means (33) designed to generate the set force and directly or indirectly transmit it to the heat-dissipating structure (22).

11. A device according to claim 9 or claim 10, **characterised in that** the heat-dissipating structure (22), at least on the opposite sides of the holders (21), has respective cold plates (24) with cooling ducts for a coolant or a refrigerating agent connected by flexible cooling ducts for producing a flow to an end face of the holder (21).

12. A device according to claim 10 or claim 11, **characterised in that** a clamping plate (31) is provided on the sides of the heat-dissipating structure (22) remote from the storage cell modules (10), wherein the number of connecting means (33) connects the clamping plates (31) to one another, non-positively and/or via the material.

13. A device according to claim 11, **characterised in that** the number of connecting means (33) are positively and/or non-positively connected to one another to the cold plates (24) disposed on opposite sides of the holder (21).

14. A device according to claim 12 or claim 13, **characterised in that** the number of connecting means (33) are directly or indirectly connected to the cold plates (24) or to the clamping plates (31) via one or more retaining rails (32) made of a rigid material.

15. A device according to any of claims 10 to 14, **characterised in that** at least some of the number of connecting means (33) are conveyed through the holder (21).

16. A device according to claim 15, **characterised in that** a respective connecting means (33) is laterally guided past a storage cell module (10) or between two storage cell modules (10).

17. A device according to claim 15 or claim 16, **characterised in that** the force absorbing elements (40) and the lugs (41, 42) of the force absorbing elements (40) extend in the direction of the number of connecting means (33).

18. A device according to any of claims 9 to 17, **characterised in that** in a storage cell module (10) comprising a number of storage cells (12) and/or double layer capacitors, these are connected by heat-conducting, mechanically rigid profiles, wherein the clamping device (30) presses the heat-dissipating structure (22) on to the profiles.

19. A device according to any of the preceding claims, **characterised in that** in order to fix the device to the vehicle, the clamping device (30) has at least one fixed bearing on one side of the holder (21) and at least one movable bearing on the other side of the holder (21).

20. A device according to any of the preceding claims, **characterised in that** the radiator core (20) is self-supporting.

21. A radiator core (20) for a device for supplying voltage to a motor vehicle, especially a car, lorry or motorcycle, wherein the voltage-supply device has one or more storage cell modules (10) each comprising one or more electrochemical storage cells (12) and/or double layer capacitors disposed alongside and/or one above the other, wherein the radiator core comprises the following:
a holder (21) for the storage cell module or modules (10) and a structure (22) for dissipating the heat given off by the storage cell module or modules (10),
wherein the radiator core (20) comprises a force absorbing device comprising at least one plate-shaped force absorbing element (40) disposed between two storage cell modules (10), **characterised in that** in the event of a crash the force acting on the device (1) is absorbed by the force-absorbing element (40) and discharged around the storage cell modules (10).

## Revendications

1. Dispositif (1) d'alimentation en tension d'un véhicule automobile notamment d'un véhicule de tourisme, d'un poids lourd ou d'une moto, comportant un ou plusieurs modules de cellules d'accumulateur (10) avec à chaque fois une ou plusieurs cellules électrochimiques d'accumulateur (12) et/ou des condensateurs à double couche, juxtaposés et/ou superposés ainsi qu'un bloc-radiateur (20) muni d'un logement (21) pour le ou les modules de cellules d'accumulateur (10) et une structure (22) pour évacuer la chaleur dégagée par le ou les modules de cellules d'accumulateur (10),
le bloc radiateur (20) ayant un élément de reprise de contraintes (40) installé entre deux modules de cellules d'accumulateur (10),
**caractérisé en ce que**
l'élément de reprise de contraintes (40) en cas de collision, absorbe la force agissant sur le dispositif (1) pour contourner les modules de cellules d'accumulateur (10).

2. Dispositif selon la revendication 1,
**caractérisé en ce qu'**
au moins un élément de reprise de contraintes (40) dépasse au moins par segment, le bloc radiateur (20).

3. Dispositif selon la revendication 1 ou 2,
**caractérisé en ce qu'**
au moins un élément de reprise d contraintes (40) coopère avec un ou plusieurs composants entourant le bloc radiateur (20) pour dévier les contraintes.

4. Dispositif selon l'une des revendications précédentes,
**caractérisé par**
au moins un élément de reprise de contraintes (40) passant à côté de l'un des modules de cellules de mémoire (10).

5. Dispositif selon l'une des revendications précédentes,
**caractérisé en ce qu'**
au moins deux éléments de reprise de contraintes (40) associés à des logements (21) différents et voisins sont l'un derrière l'autre dans la direction de transmission des contraintes.

6. Dispositif selon l'une des revendications précédentes,
**caractérisé en ce qu'**
au moins un élément de reprise de contraintes (40) comporte des pattes (41, 42) passant dans le bloc radiateur (20) et dépassant de celui-ci.

7. Dispositif selon les revendications 5 et 6,
**caractérisé en ce que**
les pattes (41, 42) des éléments de reprise de contraintes (40) l'un derrière l'autre sont adjacents pour transmettre les contraintes.

8. Dispositif selon l'une des revendications précédentes,
**caractérisé en ce qu'**
au moins un élément de reprise de contraintes (40) s'étend dans la direction de l'axe longitudinal du véhicule ou dans la direction de l'axe transversal du véhicule lorsque le dispositif est installé dans un véhicule.

9. Dispositif selon l'une des revendications précédentes,
**caractérisé en ce que**
la structure (22) d'évacuation de la chaleur est prévue sur au moins un côté du logement (21) et le bloc radiateur (20) comporte un dispositif de serrage (30) générant une force (F) prédéfinie qui pousse la structure (22) pour évacuer la chaleur contre le module de cellules d'accumulateur (10) respectif.

10. Dispositif selon la revendication 9,
**caractérisé en ce que**
le dispositif de serrage (30) comporte un certain nombre de moyens de liaison (33) qui génère la force prédéfinie et la transmet directement ou indirectement à la structure (22) pour évacuer la chaleur.

11. Dispositif selon la revendication 9 ou 10,
**caractérisé en ce que**
sur les côtés opposés des logements (21) la structure (22) pour évacuer la chaleur comporte chaque fois une plaque de refroidissement (24) avec des canaux de refroidissement pour un agent de refroidissement ou un agent frigorifique, ces canaux étant reliés sur le côté frontal des logements (21) par des canaux de refroidissement souples en technique fluidiques.

12. Dispositif selon la revendication 10 ou 11,
**caractérisé en ce que**
les côtés de la structure (22) à l'opposé du ou des modules de cellules d'accumulateur (10), ont des plaques de serrage (31) pour évacuer la chaleur, l'ensemble des moyens de liaison (33) reliant les plaques de serrage (31) par des liaisons par la force et/ou par la matière.

13. Dispositif selon la revendication 11,
**caractérisé en ce que**
l'ensemble des moyens de liaison (33) est relié par une liaison par la force et/ou par la forme aux plaques de refroidissement (24) sur les côtés opposés des logements (21).

14. Dispositif selon la revendication 12 ou 13,
**caractérisé en ce que**
l'ensemble des moyens de liaison (33) est relié directement ou indirectement par un ou plusieurs rails de fixation (32) aux plaques de refroidissement (24) ou aux plaques de serrage (31), les rails étant réalisés en un matériau rigide.

15. Dispositif selon l'une des revendications 10 à 14,
**caractérisé en ce qu'**
au moins certains des moyens de liaison (33) de l'ensemble traversent les logements (21).

16. Dispositif selon la revendication 15,
**caractérisé en ce que**
chaque moyen de liaison (33) passe latéralement à côté d'un module de cellules d'accumulateur (10) ou entre deux modules de cellules d'accumulateur (10).

17. Dispositif selon la revendication 15 ou 16,
**caractérisé en ce que**
les éléments de reprise de contraintes (40) et les pattes (41, 42) des éléments de reprise de contraintes (40) s'étendent en direction de l'ensemble des moyens de liaison (33).

18. Dispositif selon l'une des revendications 9 à 17,
**caractérisé en ce qu'**
un module de cellules d'accumulateur (10) comporte un ensemble de cellules d'accumulateur (12) et/ou de condensateurs à double couche reliés par des profilés thermoconducteurs et mécaniquement rigides, le dispositif de serrage (30) poussant la structure (22) contre les profilés pour évacuer la chaleur.

19. Dispositif selon l'une des revendications précédentes,
**caractérisé en ce que**
pour fixer le dispositif à un véhicule, le dispositif de serrage (30) comporte sur un côté des logements (21) au moins un palier fixe et de l'autre côté du logement (21) au moins un palier amovible.

20. Dispositif selon l'une des revendications précédentes,
**caractérisé en ce que**
le bloc radiateur (20) est autoporteur.

21. Bloc radiateur (20) pour un dispositif d'alimentation en tension d'un véhicule automobile, notamment d'un véhicule de tourisme, d'un camion ou d'une moto, le dispositif ayant un ou plusieurs modules d'accumulation (10) pour assurer l'alimentation en tension qui comporte chacun une ou plusieurs cellules électrochimiques d'accumulateur (12) et/ou condensateurs double couche, installés les uns à côté des autres et/ou superposés, le bloc-radiateur comportant les éléments suivants :
- un logement (21) pour le ou les modules de cellules d'accumulateur (10) et une structure (22) pour évacuer la chaleur dégagée par le ou les modules d'accumulateur (10),
- le bloc de refroidissement (20) ayant un dispositif de reprise de contraintes avec au moins un élément de reprise de contraintes (40) en forme de plaque installé entre deux modules de cellules de mémoire (10),
**caractérisé en ce que**
l'élément de reprise de contraintes (40), en cas de collision, reprend les contraintes agissant sur le dispositif (1) pour contourner les modules de cellules d'accumulateur (10).
